# FASCICULE DE BREVET EUROPEEN

(11) **EP 0 631 899 B1**
(45) Date de publication et mention de la délivrance du brevet: **24.04.1996**
(21) Numéro de dépôt: 94401448.9
(22) Date de dépôt: 27.06.1994
(51) Int. Cl.: B60N 2/16

(54) **Mécanisme de réglage de hauteur d'assise, pour siège d'automobile**
Höheneinstellungsvorrichtung für ein Kraftfahrzeug
Height adjustment device for motor vehicle

(30) Priorité: 29.06.1993 FR 9307914
(43) Date de publication de la demande: 04.01.1995
(73) Titulaire: BERTRAND FAURE AUTOMOBILE "B.F.A.", F-91300 Massy (FR)
(72) Inventeur: Bouteloup, Jean-Christophe, F-14110 Conde sur Noireau (FR)
(74) Mandataire: Picard, Jean-Claude Georges

(56) Documents cités:
- EP-A- 0 173 044
- DE-A- 3 525 374
- US-A- 4 828 213
- US-A- 5 007 611

## Description

La présente invention concerne un mécanisme de réglage de hauteur d'assise, pour siège d'automobile, du type comportant une poignée télescopique propre à entraîner en rotation, par des moyens d'accouplement appropriés, un axe de commande relié à la réhausse dudit siège de manière qu'une rotation de l'axe de commande puisse entraîner, selon le sens de cette rotation, une montée ou un abaissement de ladite assise (voir par exemple US-A-5 007 611).

Lorsqu'une telle poignée, après réglage de l'assise du siège à la hauteur voulue, se trouve verticale ou fortement inclinée, elle dépasse de l'assise, même après avoir été rétractée télescopiquement, ce qui peut causer une gêne à l'usager.

Le but de la présente invention est de résoudre ce problème, et de faire en sorte que, quel que soit le réglage souhaité pour la hauteur de l'assise, la poignée télescopique puisse toujours être ramenée en position horizontale après l'exécution de ce réglage, sans modification de ce dernier.

A cet effet, un mécanisme du type général défini au début est, conformément à l'invention, caractérisé en ce que lesdits moyens d'accouplement entre ladite poignée et ledit axe de commande sont tels que ce dernier ne puisse être entraîné indifféremment dans les deux sens que pour une position extraite de ladite poignée télescopique, la rétraction de cette poignée lui permettant, après réglage de ladite réhausse, d'être ramenée en position horizontale, sans entraînement dudit axe de commande.

Ainsi, à partir d'une position initiale basse de l'assise, par exemple, on pourra la réhausser en extrayant la poignée et en la faisant pivoter, par exemple, dans le sens horaire, à partir de sa position initiale horizontale, jusqu'à la position souhaitée. Après rétraction de cette poignée, l'utilisateur pourra la laisser revenir dans sa position initiale sans modifier le réglage de l'assise, l'axe de commande n'étant alors plus entraîné.

Dans un mode de réalisation pratique, un tel mécanisme pourra encore se caractériser en ce que lesdits moyens d'accouplement comprennent, d'une part, un moyen central d'entraînement d'une tête dudit axe de commande, par ladite poignée, dans un sens de rotation donné, et, d'autre part, un moyen excentré d'entraînement de ladite tête dudit axe de commande, par ladite poignée, dans le sens de rotation opposé au précédent, agissant seulement lorsque ladite poignée télescopique est en position extraite.

Avantageusement, ledit moyen central d'entraînement comprend un logement en arc de cercle prévu dans la partie centrale d'un boîtier dans lequel ladite poignée télescopique peut coulisser, la tête dudit axe de commande portant un téton propre à se déplacer dans ledit logement et qui se trouve en butée avec l'une des parois d'extrémité de ce logement lorsque ladite poignée se trouve dans sa position horizontale initiale, de sorte que la poignée puisse entraîner ledit axe de commande, par l'intermédiaire dudit téton, seulement dans ledit sens de rotation donné.

Quant audit moyen excentré d'entraînement, il pourra comprendre avantageusement une biellette montée pivotante dans un boîtier dans lequel ladite poignée télescopique peut coulisser, cette biellette pouvant être libérée par une extraction de ladite poignée télescopique, de sorte qu'une extrémité de cette biellette vienne en butée sur un talon de la tête dudit axe de commande pour pouvoir entraîner ce dernier dans ledit sens de rotation opposé.

Complémentairement, on peut prévoir que ladite biellette est sollicitée par un ressort vers la position pour laquelle son extrémité vient en butée sur ledit talon de ladite tête de l'axe de commande.

Toutes ces dispositions permettront à l'utilisateur de modifier un réglage d'assise déjà effectué, à partir d'une position initiale de poignée horizontale et rétractée, par exemple pour ramener l'assise en position plus basse que précédemment (en supposant que la levée de la poignée fait monter l'assise). Il lui suffira alors d'extraire la poignée télescopique et de la faire pivoter jusqu'à l'emplacement angulaire du réglage précédent, pour lequel l'extrémité de la biellette sera rappelée en appui sur le talon de l'axe. A partir de cette position, il suffira à l'utilisateur de faire pivoter la poignée en sens inverse pour ramener l'assise de son siège à la hauteur voulue.

Deux modes d'exécution de l'invention vont maintenant être décrits à titre d'exemples nullement limitatifs, avec référence aux figures du dessin ci-annexé dans lequel:
- la figure 1 est une vue en coupe selon la ligne I-I de la figure 2, c'est-à-dire par l'axe de la poignée et perpendiculairement audit axe de commande, d'un mécanisme de réglage conforme à l'invention, la poignée étant dans sa position initiale horizontale rétractée, et l'assise étant supposée située dans sa position la plus basse ;
- la figure 2 est la vue en coupe verticale correspondante, à échelle agrandie, dudit mécanisme ;
- la figure 3 est une vue analogue à celle de la figure 1, montrant la poignée en position extraite, pour une position de levage maximale de l'assise ;
- la figure 4 est une vue analogue à celle de la figure 1, l'assise étant supposée située dans la même position haute, mais la poignée étant revenue en position horizontale ; et
- la figure 5 est une vue analogue à la précédente, montrant une variante dans laquelle la tête possède deux talons, l'assise étant également en position haute maximale.

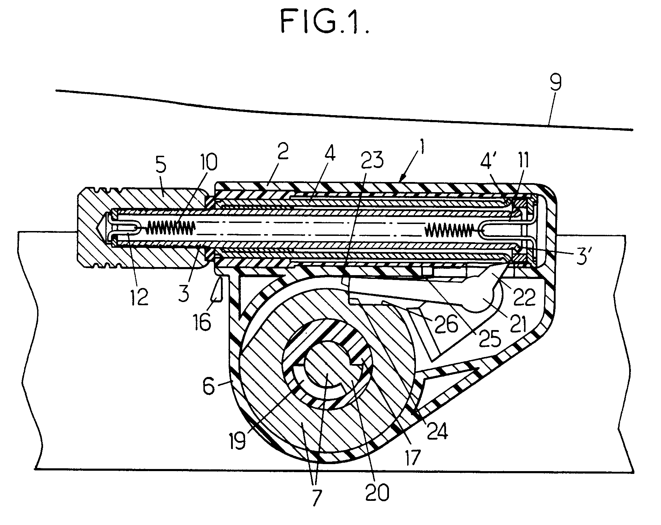

Le mécanisme représenté sur les figures 1 à 4 comporte un boîtier 1 présentant dans sa partie supérieure un canon cylindrique 2 pour la réception des éléments télescopiques tubulaires 3 et 4 de la poignée 5, et dans sa partie inférieure un carter 6 en portion de cylindre, pour la réception de la tête 7 d'un axe de commande 8, cet axe étant connecté de façon connue à la réhausse (non représentée) de l'assise 9 du siège, pour que sa rotation en provoque le levage ou l'abaissement (selon le sens de cette rotation).

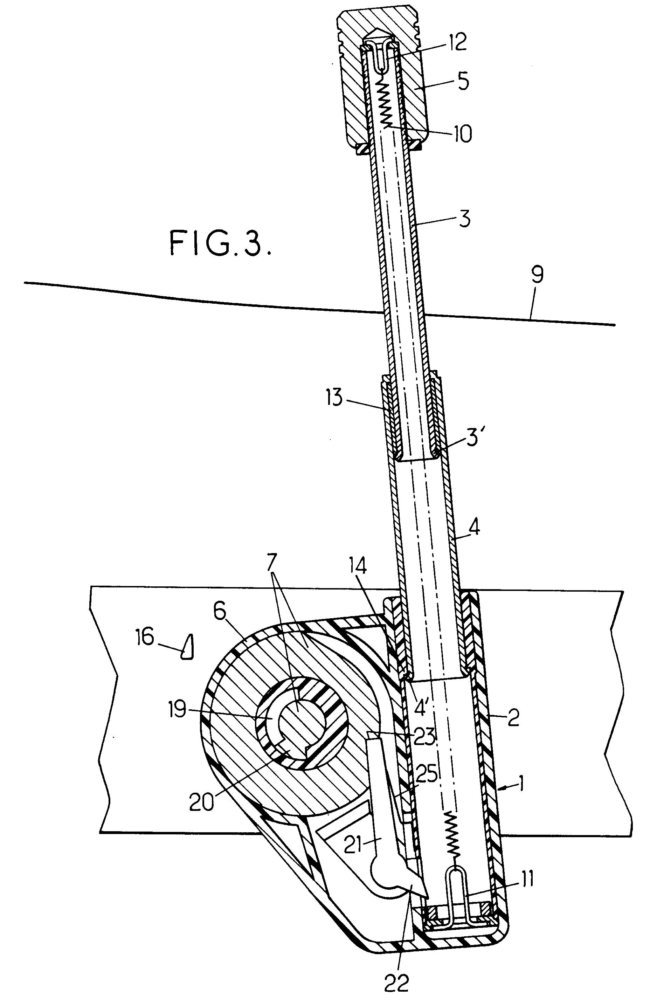

Les éléments télescopiques 3 et 4 de la poignée 5 sont normalement rappelés vers l'intérieur du canon 2 par un ressort 10 tendu entre une agrafe 11 du boîtier 1 et une agrafe 12 de la poignée. Du côté de son extrémité interne, chaque tube 3, 4 comporte un évasement, respectivement 3' et 4', propre à venir en appui sur une butée 13 du tube externe 4, ou 14 du canon 2, respectivement, ceci pour limiter l'extension maximale de la poignée, comme visible sur la figure 3.

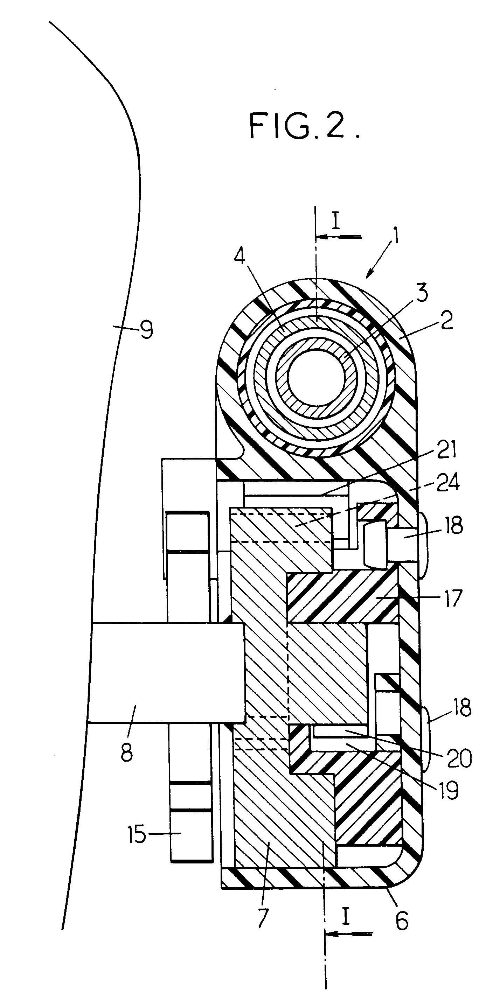

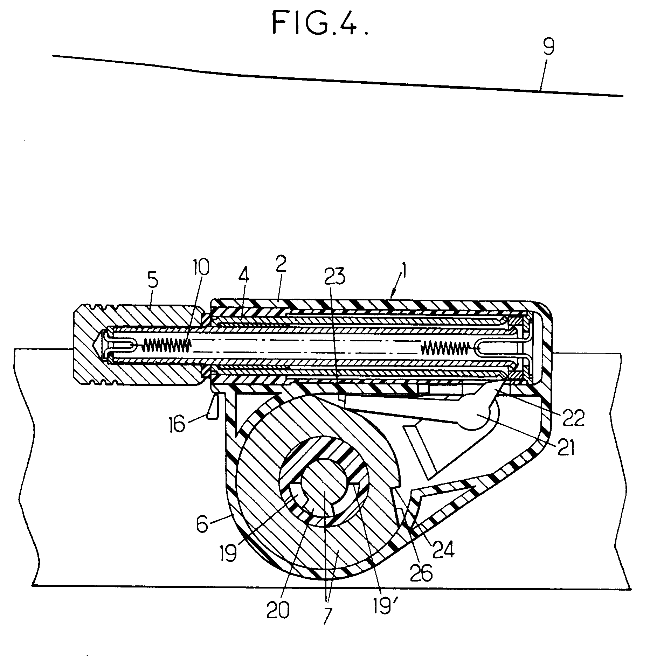

En 15, sur la figure 2, on a représenté un ressort de rappel en spirale, sollicitant le boîtier 1 vers le bas, vers la position de repos normale des figures 1 et 4, pour laquelle ce boîtier vient en appui sur une butée fixe 16.

Quant à la tête précitée 7 de l'axe 8, elle possède en section axiale le profil représenté à la figure 2, qui lui permet de s'imbriquer avec un entraîneur 17 solidarisé au carter 6 par des rivets 18. Cet entraîneur possède notamment un logement arqué 19 dans lequel se loge un téton 20 de la tête 7 de l'axe de commande. Ce téton a également une forme arquée, mais son angle au centre est notablement inférieur à celui du logement 19.

Enfin le mécanisme comporte une biellette 21 montée rotative dans le boîtier 1 et comportant une première extrémité 22 sur laquelle peut agir l'évasement 4' lors de la rétraction de la poignée, et une seconde extrémité 23 pouvant venir se bloquer sur un talon 24 de la surface périphérique de la tête d'axe 7. Cette biellette est rappelée dans le sens antihoraire par une lame-ressort 25, de sorte à pouvoir alors venir en appui sur un méplat 26 de cette surface.

A partir de la position initiale de la figure 1, le fonctionnement du mécanisme qui vient d'être décrit est le suivant :
L'assise du siège étant supposée être par exemple en position basse, l'utilisateur peut la remonter en extrayant la poignée 5, ce qui laisse la biellette pivoter dans le sens antihoraire, son extrémité 23 venant se bloquer sur le talon 24. Le pivotement de la poignée 5 dans le sens horaire, jusqu'à la position choisie, fait tourner le boîtier 1 et l'entraîneur 17 dans le même sens, ce qui entraîne l'axe 8 également dans le sens horaire, par intervention de l'extrémité droite 19' du logement arqué 19 sur le téton 20 de la tête 7 de cet axe. Le basculement extrême de la poignée 5 vers le haut, correspondant à la position la plus haute de l'assise 9, est représenté à la figure 3. Pour tout positionnement intermédiaire, l'utilisateur peut toujours rabaisser son assise, en ramenant la poignée 5 dans le sens antihoraire. C'est alors l'extrémité 23 de la biellette 21, qui en agissant sur le talon 24 de la tête 7 de l'axe 8, ramène ce dernier dans le sens antihoraire. Lorsque l'utilisateur a obtenu la hauteur d'assise 9 souhaitée, il relâche la poignée 5, qui se rétracte alors sous l'effet du ressort 10. L'évasement 4' de l'élément télescopique 4, en venant agir sur l'extrémité 22 de la biellette 21, fait pivoter celle-ci dans le sens horaire (par rapport au boîtier 1), ce qui amène l'extrémité 23 de la biellette au-dessus du talon 24. Le pivotement du boîtier 1 dans le sens antihoraire, sous l'action du ressort 15, peut donc s'effectuer sans que l'extrémité 23 de la biellette fasse repivoter l'axe 8. La poignée 5 peut donc regagner sa position initiale de repos (figure 4) sans modification du réglage de la hauteur de l'assise 9.

A partir de cette position, l'utilisateur peut encore modifier son réglage en tirant sur la poignée 5 et en la faisant pivoter vers le haut jusqu'à ce que le téton 20 revienne en appui sur l'extrémité de droite 19' du logement 19 ; l'extrémité 23 de la biellette 21 revient alors en appui sur le talon 24 de la tête 7, et l'utilisateur peut hausser ou abaisser son assise 9 en faisant pivoter la poignée 5 dans le sens correspondant : dans le sens horaire, c'est l'extrémité de droite 19' du logement 19 qui, en agissant sur le téton 20, fait tourner l'axe 8 dans le même sens, et dans le sens antihoraire, c'est l'extrémité 23 de la biellette qui, en agissant sur le talon 24, fait tourner l'axe 8 dans le sens antihoraire.

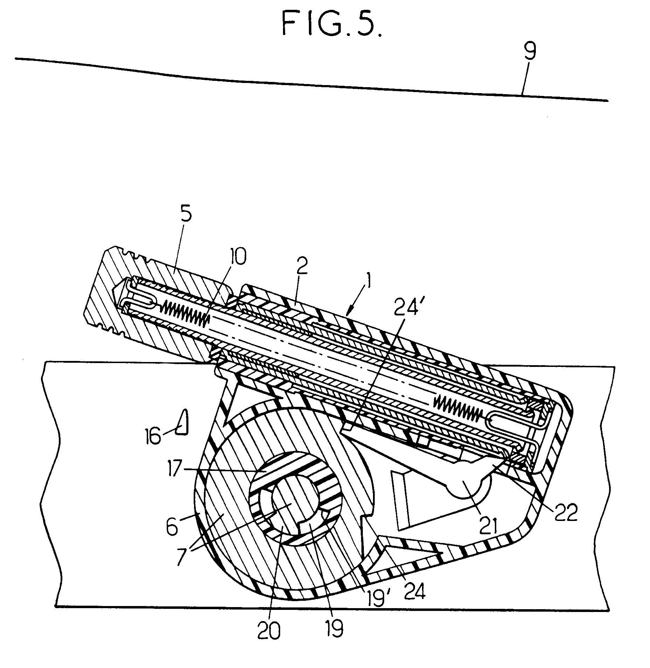

Il peut être avantageux de prévoir sur la surface périphérique de la tête d'axe 7 un second talon 24' angulairement décalé par rapport au talon 24, par exemple d'un angle de 70°, comme indiqué sur la figure 5.

Grâce à cette disposition, l'utilisateur peut rabaisser l'assise 9 à partir d'une position plus basse de la poignée 5, ergonomiquement beaucoup plus satisfaisante qu'une position plus haute, telle par exemple celle de la figure 3.

En effet, pour rabaisser l'assise qui est en position haute maximale, l'utilisateur peut se contenter de tourner la poignée d'environ 20° en arrière pour accrocher le talon 24' et ramener la poignée en position horizontale. Il pourra ensuite ramener encore la poignée de 70° dans le sens arrière pour accrocher le talon 24 afin de rabaisser encore l'assise et de pouvoir ramener encore une fois la poignée dans sa position horizontale.

L'invention présente donc l'avantage incontestable de permettre d'effectuer commodément le réglage de la hauteur d'assise d'un siège, par exemple de véhicule automobile, et de ramener toujours la poignée dans une position d'effacement horizontale, sans modification non souhaitée du réglage qui vient d'être effectué.

## Revendications

1. Mécanisme de réglage de hauteur d'assise, pour siège d'automobile, du type comportant une poignée télescopique (5) propre à entraîner en rotation, par des moyens d'accouplement (17, 21) appropriés, un axe de commande (8) relié à la réhausse dudit siège de manière qu'une rotation de l'axe de commande (8) puisse entraîner, selon le sens de cette rotation, une montée ou un abaissement de ladite assise (9), caractérisé en ce que lesdits moyens d'accouplement entre ladite poignée (5) et ledit axe de commande (8) sont tels que ce dernier ne puisse être entraîné indifféremment dans les deux sens que pour une position extraite de ladite poignée télescopique (5), la rétraction de cette poignée lui permettant, après réglage de ladite réhausse, d'être ramenée en position horizontale, sans entraînement dudit axe de commande (8).

2. Mécanisme selon la revendication 1, caractérisé en ce que lesdits moyens d'accouplement comprennent, d'une part, un moyen central (17) d'entraînement d'une tête (7) dudit axe de commande (8), par ladite poignée (5), dans un sens de rotation donné, et, d'autre part, un moyen excentré (21) d'entraînement de ladite tête (7) dudit axe de commande (8), par ladite poignée (5), dans le sens de rotation opposé au précédent, agissant seulement lorsque ladite poignée télescopique (5) est en position extraite.

3. Mécanisme selon la revendication 2, caractérisé en ce que ledit moyen central d'entraînement comprend un logement en arc de cercle (19) prévu dans la partie centrale d'un boîtier (1) dans lequel ladite poignée télescopique (5) peut coulisser, la tête (7) dudit axe de commande (8) portant un téton (20) propre à se déplacer dans ledit logement (19) et qui se trouve en butée avec l'une (19') des parois d'extrémité de ce logement (19) lorsque ladite poignée (5) se trouve dans sa position horizontale initiale, de sorte que la poignée puisse entraîner ledit axe de commande (8), par l'intermédiaire dudit téton (20), seulement dans ledit sens de rotation donné.

4. Mécanisme selon la revendication 2 ou 3, caractérisé en ce que ledit moyen excentré d'entraînement comprend une biellette (21) montée pivotante dans un boîtier (1) dans lequel ladite poignée télescopique (5) peut coulisser, cette biellette (21) pouvant être libérée par une extraction de ladite poignée télescopique (5), de sorte qu'une extrémité (23) de cette biellette (21) vienne en butée sur un talon (24) de la tête (7) dudit axe de commande (8) pour pouvoir entraîner ce dernier dans ledit sens de rotation opposé.

5. Mécanisme selon la revendication 4, caractérisé en ce que ladite biellette (21) est sollicitée par une lame-ressort (25) vers la position pour laquelle son extrémité (23) vient en butée sur ledit talon (24) de ladite tête (7) de l'axe de commande (8).

6. Mécanisme selon la revendication 4 ou 5, caractérisé en ce que ladite tête (7) de l'axe de commande (8) comporte au moins deux talons (24, 24') angulairement décalés, propres à coopérer avec ladite extrémité (23) de la biellette (21).

7. Mécanisme selon la revendication 6, caractérisé en ce que le décalage angulaire des deux dits talons (24, 24') est de l'ordre de 70°.

## Claims

1. Squab height adjustment mechanism for a motor vehicle seat, of the type having a telescopic handle (5) able to be driven in rotation, by suitable coupling means (17, 21), a control shaft (8) connected to the lifting member of the said seat so that a rotation of the control shaft (8) can give rise, according to the direction of this rotation, to a raising or lowering of the said squab (9), characterised in that the said coupling means between the said handle (5) and the said control shaft (8) are such that the latter can be driven equally well in both directions only with the said telescopic handle (5) in the extracted position, the retraction of this handle enabling it, after adjustment of the said lifting member, to be returned into the horizontal position, without driving the said control shaft (8).

2. Mechanism according to claim 1, characterised in that the said coupling means comprise on the one hand a central means (17) of driving a head (7) of the said control shaft (8), by means of the said handle (5), in a given direction of rotation, and on the other hand an eccentric means (21) of driving the said head (7) of the said control shaft (8), by means of the said handle (5), in the direction of rotation opposite to the previous one, acting solely when the said telescopic handle (5) is in the extracted position.

3. Mechanism according to claim 2, characterised in that the said central driving means comprises a housing in the shape of an arc of a circle (19) provided in the central part of a casing (1) in which the said telescopic handle (5) is able to slide, the head (7) of the said control shaft (8) carrying a stud (20) able to move in the said housing (19) and which is in abutment against one (19') of the said end walls of this housing (19) when the said handle (5) is in its initial horizontal position, so that the handle can drive the said control shaft (8), by means of the said stud (20), only in the said given direction of rotation.

4. Mechanism according to Claim 9 or 3, characterised in that the said eccentric driving means comprises a rocker (21) pivotally mounted in a casing (1) in which the said telescopic handle (5) is able to slide, this rocker (21) being able to be released by extraction of the said telescopic handle (5), so that one end (23) of this rocker (21) comes into abutment against a heel (24) on the head (7) of the said control shaft (8) in order to be able to drive the latter in the said opposite direction of rotation.

5. Mechanism according to Claim 4, characterised in that the said rocker (21) is forced by a leaf spring (25) towards the position in which its end (23) comes into abutment on the said heel (24) on the said head (7) of the control shaft (8).

6. Mechanism according to Claim 4 or 5, characterised in that the said head (7) of the control shaft (8) has at least two angularly offset heels (24, 24'), suitable for cooperating with the said end (23) of the rocker (21).

7. Mechanism according to Claim 6, characterised in that the angular offset of the said two heels (24, 24') is around 70°C.

## Patentansprüche

1. Vorrichtung zum Einstellen der Höhe des Sitzteils eines Kraftfahrzeugsitzes, die aus einem Teleskophandgriff (5) besteht, mit dem über geeignete Kupplungsmittel (17, 21) eine Steuerachse (8) in Umdrehung versetzt werden kann, die mit dem Stellorgan des Sitzes derart verbunden ist, daß eine Drehung der Steuerachse (8) ein Anheben oder ein Absenken des Sitzteils (9) im Sinne dieser Drehung hervorrufen kann, dadurch gekennzeichnet, daß die Kupplungsmittel zwischen dem Handgriff (5) und der Steuerachse (8) so ausgebildet sind, daß die Steuerachse in gleicher Weise in den beiden Richtungen nur bei ausgezogener Stellung des Teleskophandgriffes (5) betätigt werden kann, wobei das Einschieben des Handgriffes nach Einstellen des Stellorgans es ermöglicht, den Griff ohne Betätigung der Steuerachse in die waagerechte Stellung zu verschwenken.

2. Vorrichtung nach Anspruch 1, dadurch gekennzeichnet, daß die Kupplungseinrichtungen einerseits einen mittleren Teil (17) zum Antreiben eines Kopfes (7) der Steuerachse (8) über den Handgriff (5) in einer gegebenen Drehrichtung und andererseits ein exzentrisches Werkstück (21) zum Antreiben des Kopfes (7) der Steuerachse (8) mittels des Handhebels (5) entgegengesetzt zu der vorstehend erwähnten Drehrichtung enthalten, das nur wirksam ist, wenn der teleskopische Handhebel (5) in seiner ausgefahrenen Stellung ist.

3. Vorrichtung nach Anspruch 2, dadurch gekennzeichnet, daß das mittlere Antriebsteil (17) aus einem kreisbogenförmigen Lager (19) besteht, das im mittleren Abschnitt eines Gehäuses (1) vorgesehen ist, in dem sich der teleskopische Handhebel (5) verschieben kann, wobei der Kopf (7) der Steuerachse (8) einen Ansatz (20) aufweist, der sich in dem Lager (19) verschieben kann und der an einer der Wände (19') am Ende des Lagers (19) zum Anschlag kommt, wenn der Handhebel (5) sich in der waagerechten Ausgangsstellung befindet, so daß der Handhebel die Steuerachse (8) über den Ansatz (20) nur in der gegebenen Drehrichtung verschieben kann.

4. Vorrichtung nach Anspruch 2 oder 3, dadurch gekennzeichnet, daß das exzentrische Antriebsmittel aus einem Gelenkhebel (21) besteht, der schwenkbar an dem Gehäuse (1) befestigt ist, in dem sich der teleskopische Handhebel (5) verschieben kann, wobei der Gelenkhebel (21) durch Ausziehen des Teleskophandhebels (5) derart freigesetzt werden kann, daß ein Ende (23) dieses Hebels (21) an einem Absatz (24) des Kopfes (7) der Steuerachse (8) in Anschlag kommt, um diese in der entgegengesetzten Drehrichtung antreiben zu können.

5. Vorrichtung nach Anspruch 4, dadurch gekennzeichnet, daß der Gelenkhebel (21) mittels eines Federblattes (25) in die Stellung gedrückt wird, in der sein Ende (23) gegen den Ansatz (24) des Kopfes (7) der Steuerachse (8) anschlägt.

6. Vorrichtung nach Anspruch 4 oder 5, dadurch gekennzeichnet, daß der Kopf (27) der Steuerachse (8) wenigstens zwei Ansätze (24, 24') enthält, die winklig zueinander versetzt sind und mit dem Ende (23) des Gelenkhebels (21) zusammenwirken können.

7. Vorrichtung nach Anspruch 6, dadurch gekennzeichnet, daß die winklige Versetzung der beiden Ansätze (24, 24') etwa 70° beträgt.
